# EUROPEAN PATENT APPLICATION

(11) **EP 2 731 031 A2**
(43) Date of publication of application: **14.05.2014**
(21) Application number: 13191859.1
(22) Date of filing: 07.11.2013
(51) Int. Cl.: G06F 17/30

(54) **Wireless telecommunication method between a remote server and a battery-powered mobile hand-held terminal via a mobile cellular digital telecommunication network**

(30) Priority: 07.11.2012 CN 201210441539; 15.11.2012 US 201213678478
(71) Applicant: SAP AG, 69190 Walldorf (DE)
(72) Inventor: Huang, Delta, 69190 Walldorf (DE); Sun, Olivia, 69190 Walldorf (DE)
(74) Representative: Richardt Patentanwälte PartG mbB

(57) **Abstract**

Described herein is a wireless telecommunication method between a remote server and a battery-powered mobile hand-held terminal via a mobile cellular digital telecommunication network. In some embodiments the mobile terminal comprises a transceiver being adapted to transmit and receive data via the mobile cellular digital telecommunication network for example for the purpose of exchanging data with the remote server. Further the mobile terminal may comprise at least one processor. The processor is operable to provide an interface engine which is operable to render electronic documents received at the mobile terminal as set forth below. For visualizing a rendered electronic document the interface engine further comprises a browser program. To display a rendered document to a user of the mobile terminal, the mobile terminal may comprise a touch-sensitive display which is coupled to the interface engine. As a result the interface engine may render an electronic document and display the result of this rendering to a user of the mobile terminal using the browser and the touch-sensitive display.

## Description

### TECHNICAL FIELD

The present disclosure relates to a wireless telecommunication method between a remote server and a battery-powered mobile hand-held terminal via a mobile cellular digital telecommunication network making use of a touch-sensitive display of the mobile hand-held terminal.

### BACKGROUND

Mobile devices used in a digital wireless telecommunication framework are usually powered by batteries. As the capacity of such batteries is limited a reduction of power consumption is of major concern.

The present disclosure is directed to resolve these issues by effectively visualizing electronic documents.

### SUMMARY

A wireless telecommunication method between a remote server and a battery-powered mobile hand-held terminal via a mobile cellular digital telecommunication network is described herein. In some embodiments the mobile terminal comprises a transceiver being adapted to transmit and receive data via the mobile cellular digital telecommunication network for example for the purpose of exchanging data with the remote server. Further the mobile terminal may comprise at least one processor. The processor is operable to provide an interface engine which is operable to render electronic documents received at the mobile terminal as set forth below. For visualizing a rendered electronic document the interface engine further comprises a browser program. To display a rendered document to a user of the mobile terminal, the mobile terminal may comprise a touch-sensitive display which is coupled to the interface engine. As a result the interface engine may render an electronic document and display the result of this rendering to a user of the mobile terminal using the browser and the touch-sensitive display.

The mobile terminal further comprises a battery for power supply to the mobile terminal. The battery may be an integral part of the terminal or may be exchangeable. For storing received or rendered data and for storing machine executable instructions for execution by the processor, the mobile terminal may further comprise a memory.

Using the components of the hand-held terminal described above, the method comprises the steps of receiving an electronic document from the remote server using the transceiver, rendering the received electronic document using the interface engine and displaying the rendered electronic document to a user using the touch-sensitive display of the mobile terminal. Herein the method step of rendering the electronic document comprises providing a primary hierarchy having primary components arranged in different primary hierarchical levels. The method also includes providing a secondary hierarchy for the primary components of the primary hierarchy. The primary components are configured as geometric objects with concentric zones corresponding to different secondary hierarchical levels with secondary components. An innermost concentric zone of the geometric objects is the highest secondary level of the secondary hierarchy and outer concentric zones correspond to lower secondary levels of the secondary hierarchy, with an outermost concentric zone corresponding to the lowest secondary level of the secondary hierarchy. The concentric zones at lower secondary levels are divided into segments corresponding to a number of secondary components in the lower secondary levels.

Each of the primary and secondary components may be representative of a search criterion. For example a hierarchy may represent the staff of a company. Thus a component may represent one of the employees characterized by the division he is working in, the current project he is working on, the current work load etc. Another example may be the product line-up of a company, wherein each of the components represents a product and wherein the plurality of products is arranged in groups. A search criterion may then be the material a product is made of, the price or a price spread of a product, the profit per unit sold etc.

The components presented to a user in the multi-hierarchy view described above are selectable for example by touching the display at the position the component to be selected is displayed. Upon selection of one or more components a query comprising the search criteria the selected components are representative of is generated by the at least one processor and sent to the remote server. It has to be noted, that a search criterion not necessarily only comprises a single entry. A search criterion may also comprise a number of parameters suited for specifying a query.

The method described before may have the advantage that the information comprised in the electronic document is presented in a very compact way. As a result the visualization of the information can be realized on small displays without a need for scrolling or zooming means. As scrolling and zooming cause a processor providing the image to consume a considerable amount of energy stored in the mobile terminals battery, the method described above may facilitate to extend the duration of a battery powered mobile terminal.

In some embodiments the rendered electronic document is resized to the size of the touch-sensitive display of the mobile terminal. Resizing may be part of the rendering process itself. As the size of the individual components shown in the rendered electronic document may be reduced by the resizing process such that it becomes very hard to select individual components by touching them with for example a finger, the hand-held terminal may further comprise an entry-pen. The entry-pen is designed such that the touch-sensitive display is able to recognize the entry-pen touching the surface of the display. In a further embodiment the hand-held terminal may comprise a holding fixture adapted to receive and hold the entry-pen if it is not used by a user of the mobile hand-held terminal.

Resizing the rendered electronic document may have the advantage that the whole rendered electronic document can be displayed at once. As a result it is not necessary to scroll in order to view different components of the electronic document. As pointed out before, scrolling causes increased processor load and as a result increases the energy consumption of the hand-held terminal.

In some embodiments the hand-held terminal is operable to switch into a power saving mode by disabling a scrolling functionality of the browser of the interface engine. Switching into power-saving-mode is preferably triggered upon resizing the rendered electronic document as scrolling may not be necessary any more once the resizing has been conducted. As the scrolling functionality of the browser is disabled the browser may also hide any display icons related to scrolling or image shifting processes. As a result more space of the display can be used for displaying the rendered, resized electronic document.

In yet another embodiment a battery-powered mobile hand-held terminal is disclosed. The mobile hand-held terminal may comprise a transceiver adapted to transmit and receive data via a mobile cellular digital telecommunication network, at least one processor for providing an interface engine, the interface engine comprising a browser program, a touch-sensitive display being coupled to the interface engine, a battery, and a memory for storing machine executable instructions for execution by the processor. The machine executable instructions may cause the battery-powered mobile hand-held terminal to receive an electronic document from a remote server using the transceiver, render the received electronic document using the interface engine, and display the rendered electronic document using the touch-sensitive display. Rendering the electronic document may comprise providing a primary hierarchy having primary components arranged in different primary hierarchical levels and providing a secondary hierarchy for the primary components of the primary hierarchy, wherein the primary components are configured as geometric objects with concentric zones corresponding to different secondary hierarchical levels with secondary components. An innermost concentric zone of the geometric objects is the highest secondary level of the secondary hierarchy and outer concentric zones correspond to lower secondary levels of the secondary hierarchy, with an outermost concentric zone corresponding to the lowest secondary level of the secondary hierarchy. The concentric zones at lower secondary levels are divided into segments corresponding to a number of secondary components in the lower secondary levels. Each of the primary and secondary components is representative of a search criterion, wherein the primary and secondary components are selectable using the touch-sensitive display of the mobile terminal. Upon selection of at least one of the primary and/or secondary components a query comprising the search criterion the selected component is representative of is generated by the at least one processor and sent to the remote server using the transceiver.

In yet another embodiment, a system is disclosed. The system comprises at least one battery-powered mobile hand-held terminal as described before and at least one remote server. The battery-powered mobile hand-held terminal and the remote server are operable to establish a connection via a mobile cellular digital communication network.

It is understood that one or more of the aforementioned embodiments of the invention may be combined as long as the combined embodiments are not mutually exclusive.

With these and other advantages and features that will become hereinafter apparent, further information may be obtained by reference to the following detailed description and appended claims, and to the figures attached hereto.

### BRIEF DESCRIPTION OF THE DRAWINGS

Some embodiments are illustrated in the accompanying figures. Like reference numerals in the figures designate like parts.
FIG. 1 shows an embodiment of an environment;
FIG. 2 shows an embodiment of a software environment;
FIG. 3 shows an exemplary organizational hierarchy;
FIG. 4a shows an exemplary secondary hierarchy for a unit of an organizational hierarchy;
FIG. 4b shows an exemplary RCS subset;
FIG. 5 shows an exemplary embodiment of a 2-dimensional representation of a secondary hierarchy for a unit of an organizational hierarchy;
FIG. 6 shows an exemplary embodiment of a 2-dimensional representation of an organizational hierarchy with a secondary hierarchy;
FIGS. 7a-b show exemplary embodiments of a 2-dimensional representation of an organizational hierarchy with secondary hierarchy using a filtering function; and
FIG. 8 shows an exemplary embodiment of a 2-dimensional representation of an organizational hierarchy with a secondary hierarchy using a drill down function.

### DETAILED DESCRIPTION

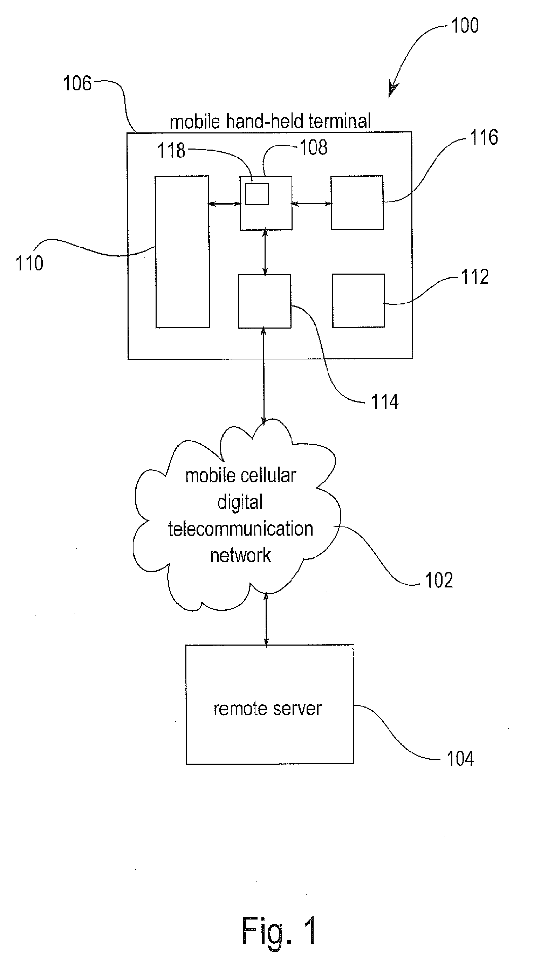

In the following description, for purposes of explanation, specific numbers, materials and configurations are set forth in order to provide a thorough understanding of the present frameworks and methods and in order to meet statutory written description, enablement, and best-mode requirements. However, it will be apparent to one skilled in the art that the present frameworks and methods may be practiced without the specific exemplary details. In other instances, well-known features are omitted or simplified to clarify the description of the exemplary implementations of present frameworks and methods, and to thereby better explain the present frameworks and methods. Furthermore, for ease of understanding, certain method steps are delineated as separate steps; however, these separately delineated steps should not be construed as necessarily order dependent or being separate in their performance. FIG. 1 shows a block diagram of an exemplary environment 100 for practicing the telecommunication method according to the present invention. The environment 100 comprises a mobile cellular digital telecommunication network 102, a mobile hand-held terminal 106 and a remote server 104. It is understood, that the remote single remote server 104 is merely for illustrative purposes. The method according to the present invention may also be practiced using a plurality of remote servers 104. The hand-held terminal 106 comprises a display 110, a transceiver 114, a processor 108, a memory 116 and a battery 112 for powering the mobile hand-held terminal. The processor 108 further comprises an interface engine 118 which will be discussed below. The processor 108 of the hand-held terminal 106 is operatively coupled to the memory 116, the display 110 and to the transceiver.114.

Using the transceiver 114 the hand-held mobile terminal is operable to exchange data with the remote server 104 via the mobile cellular digital telecommunications network 102. For example the hand-held terminal 106 may send a request for data like an electronic document to the remote server 104 via the telecommunication network 102 and in response receive the requested data from the remote server 104. However the remote server 104 may also send data to the mobile hand-held terminal 106 without having received a request. For example the remote server 104 may send data using a time pattern.

Once the transceiver 114 of the hand-held terminal 106 received the data, the data is forwarded to the processor 108. Using its interface engine 118 the processor 108 then renders the received data as set forth below. In accordance with a preferred embodiment of the invention the result of this rendering is a very compact visualization of an electronic document comprised in the received data. The components comprised in the electronic document are arranged in a first and a second hierarchical structure as set forth below. The rendered data that is the rendered electronic document is then presented to a user of the mobile hand-held terminal 106 using the touch sensitive display 110.

As described before, the components of the electronic document are representative of a search criterion. If a user for example needs a drill down view (see below) of the hierarchical structure the user may select one or more components from the presented electronic document for example by touching the corresponding object with his finger or using an entry pen adapted for use with the touch-sensitive display 110. The selection of components from the plurality of components presented in the electronic document may then be registered by the touch-sensitive display110. The information on the selected components is then forwarded to the processor 108 which in turn sends a request for data corresponding to the search criteria the selected components are representative of to the remote server 104 via the mobile cellular digital telecommunication network 102 using the transceiver 114.

The memory 116 of the hand-held mobile terminal 106 may for example be used for storing machine executable code causing the processor 108 to work as described before. Further, the memory 116 can be used for storing data received from remote server 104 or for storing the result of the rendering of a received electronic document by the interface engine 118 in order to present the rendered electronic document to a user at a later point in time.

Various types of devices may serve as a mobile hand-held terminal 106. For example, the mobile hand-held terminal 106 may be a PC, tablet PC, mobile phone, smartphone, or a personal data assistant (PDA). Other types of devices may also be used. These devices are characterized in that they can receive, transmit, process and store any appropriate data associated with the environment 100

The remote server 104, in one embodiment, may be a computer which includes a memory and a processor. The server is configured to transmit, receive, process and store information or data associated with the environment. Various types of computers may be employed. For example, the computer may be a mainframe, workstation, as well as other types of processing devices. The server may be adapted to execute any operating system. For example, the operating system of the server may be z/OS, Linux-Intel, Linux/390, UNIX, or Windows Server. Other types of operating systems may also be used. The server may also include or be communicatively coupled with a web server and/or a Simple Mail Transfer Protocol (SMTP) server.

The memory of the server may include any non-transitory memory or database module. The memory may be volatile or non-volatile types of memories, such as magnetic media, optical media, random access memory (RAM), read-only memory (ROM), removable media, or any other suitable local or remote memory component. Client/server (C/S) applications may be provided in the environment. Generally, C/S applications include front end and back end portions. The front end portions are stored locally on the hand-held mobile terminal 106, while the back end portions are located in the remote server 104. Various types of C/S applications may be provided in the environment.

A hand-held mobile terminal 106 may employ a user interface for a user to interface with the environment for various purposes. For example, the interface may be used to access various applications in the environment. The user interface may also serve other purposes. In one embodiment, the user interface comprises a graphical user interface (GUI). A GUI may provide an efficient and user-friendly manner of presenting information or communicating with the environment. For example, a GUI may include a task menu as well as one or more panes for displaying information. Other types of user interfaces, such as command line interface (CLI), may also be useful. The type of user interface may depend on the type of application running on the client. For example, the front end portion may include a GUI to enable a user to interact with the back end portion to access data stored in the server.

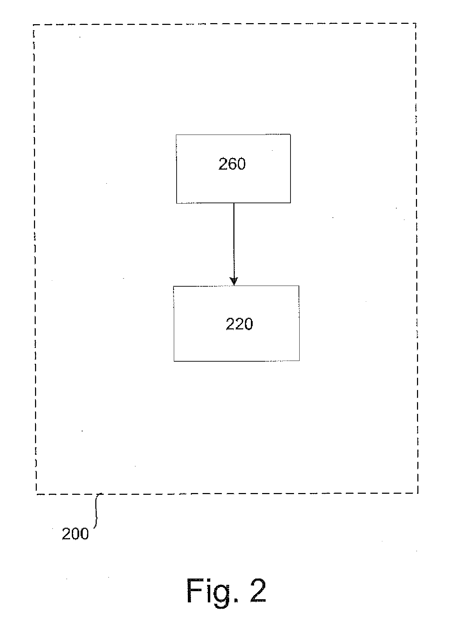

Fig. 2 shows an embodiment of a software environment 200. As shown, the software environment includes a data source 260. The data source, for example, may include data files. Any type of files may also be contained in the data source. The files, for example, may be reports, spreadsheets, XML files, flat files, web service files or other types of files. The data files may be generated from one or more software applications, such as database or other types of software applications. For example, data may be personal data or business data, such as data of a company. Business data can include employee data, sales data, as well as other types of data related to a company. In one embodiment, the data source includes files related to hierarchies. The hierarchies, for example, include primary and secondary hierarchies.

The software application may include various types of functions, such as report generation and functions related to data analytics. The software application may have a C/S architecture. For example, data, reports and other information may be stored in a server. In other embodiments, the software application may be locally installed in a client or a standalone computer. In such cases, the data, reports and other information are locally stored.

In one embodiment, the software application comprises a business application. Various types of business applications may be used. The business application, for example, maintains data of a business or company and creates business reports relating to the data. Such business applications may include, for example, SAP Crystal Solutions, including Xcelsius, Crystal Reports, Web Intelligence from SAP AG. Other types of business applications or suites of business applications may also be useful. For example, the application may be governance, risk and compliance (GRC) application, such as SAP Business Objects GRC application.

An information hierarchy visualization (IFV) application 220 is provided in the software environment and may be part of the interface engine 118 depicted in Fig. 1. The IFV application is used to display or configure information of multiple hierarchies in a 2-diemensional display or view. In one embodiment, the IFV application displays first and second hierarchies. The IFV, for example, displays a primary hierarchy and a secondary hierarchy. The secondary hierarchy, for example, is a hierarchy of components or units in the primary hierarchy. For example, the second-ary hierarchy is a hierarchy within the primary hierarchy. In some embodiments, the primary hierarchy may include multiple secondary hierarchies. IFV application may be dynamically configured to display any one of the secondary hierarchies with the primary hierarchy. Providing an IFV application which displays other number of hierarchies or configurations of hierarchies may also be useful.

In one embodiment, the primary hierarchy is an organization hierarchy and the secondary hierarchy is a subprocess-control structure (SCS) hierarchy. In other embodiments, the secondary hierarchy is a risk-control structure (RCS) hierarchy. In yet other embodiments, multiple secondary hierarchies are provided. For example, the secondary hierarchies may include SCS and RCS hierarchies. Other primary and secondary hierarchies may also be useful.

In one embodiment, the IFV application is integrated into a business application. For example, the IFV may be integrated into a GRC application, such as SAP^{®} GRC. Other configurations of the IFV application may also be useful. For example, the IFV may be integrated into other types of business applications. In other embodiments, the IFV may be a standalone application, providing a visualization model for multiple hierarchies.

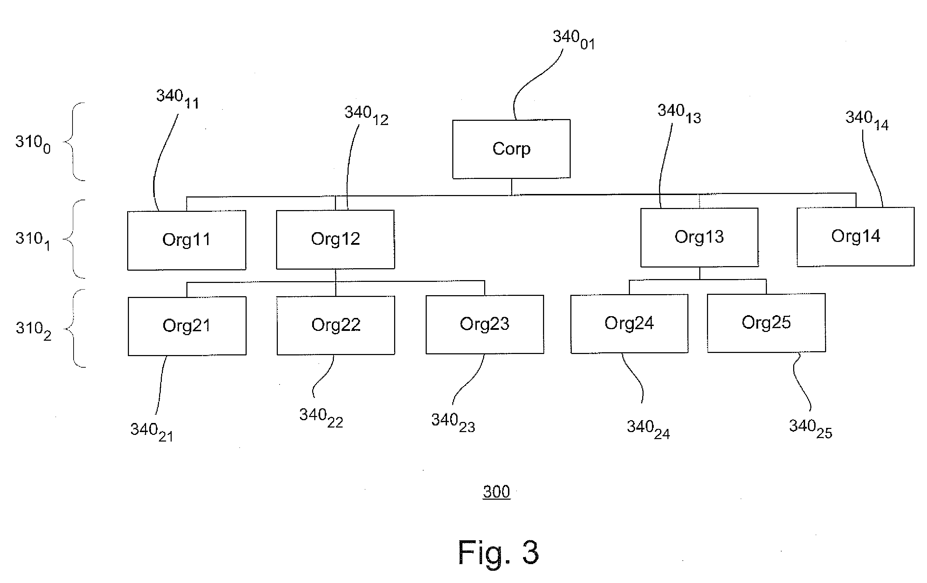

Fig. 3 shows an exemplary organization hierarchy 300. In one embodiment, the hierarchy is of an organization, such as a corporation. Other types of organizations may also be useful. The organization hierarchy has various organizational levels. For example, the organization hierarchy has h levels. As shown, the hierarchy has three levels 310₀₋₂ (e.g., h = 3). Providing a hierarchy with other number of levels may also be useful. The number of levels, for example, may depend on the model of the corporation.

The hierarchy includes units or organization units (org units) 340ₓₙ at the different organizational levels. The subscript x corresponds to the level of the hierarchy and n corresponds to the number of units within a level. The relationships of the org units are indicated by lines, forming a tree structure. At the highest level 310₀, org unit 340₀₁ corresponds to the corporation. As for the lower levels, the org units correspond to different units of the corporation. For example, four intermediate level org units 340₁₁, 340₁₂, 340₁₃ and 340₁₄ correspond to four different major units of the corporation. The major units may include corporate, financial and business units. The intermediate level org units are reflected in the intermediate or second level 310₁ of the hierarchy. Five bottom level org units 340₂₁, 340₂₂, 340₂₃, 340₂₄ and 340₂₅ are provided. The bottom level org units may be org units (minor org units) of the major org units. For example, minor org units may be regional units of the major units. Regional units may be divided according to geographical regions, such as Asia, Americas and Europe. The bottom level org units are reflected in the bottom or third level 310₂.

Illustratively, first, second and third bottom level org units 340₂₁, 340₂₂ and 340₂₃ are minor units of the second intermediate org unit 340₁₂ and fourth and fifth minor units 340₂₄ and 340₂₅ are minor units of the third intermediate org unit 340₁₃. Not all intermediate org units have or need to have minor org units at the bottom level. It is understood that the organization hierarchy is merely for illustration purposes. An actual organization hierarchy may be different and reflects the corporation which is modeled. For example, the hierarchy may have different number of levels as well as org units.

An org unit of the corporation includes one or more subsets. In one embodiment, an org unit includes a SCS subset. Other types of subsets are also useful. For example, an org unit may include a RCS subset. In some cases, an org unit may include both SCS and RCS subsets. Providing an org unit with other types of subsets may also be useful. A subset is a node in the secondary hierarchy. For example, a subset maybe a subprocess or a risk. For example, a subset may be a subprocess for a SCS subset or a risk for a RCS subset. A subset includes one or more controls. For example, an organization may have different subprocesses and controls for those subprocesses or different risks and control for those risks.

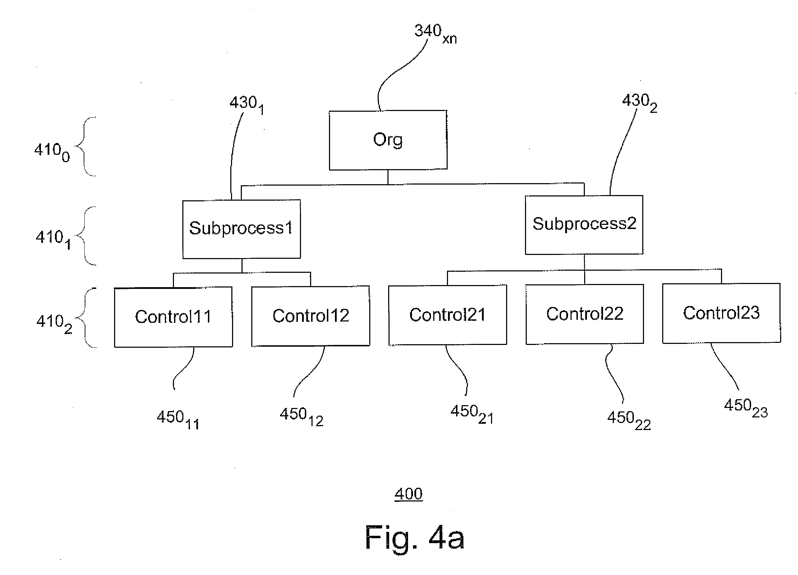

Fig. 4a shows an exemplary secondary hierarchy of a unit 340ₓₙ of an org unit. The secondary hierarchy includes y plurality of levels. As shown, the secondary hierarchy includes three levels 410₀₋₂ (e.g., y = 3). Providing a secondary hierarchy with other number of levels may also be useful. The number of levels, for example, may depend on the model of the secondary hierarchy.

The highest level 410₀ represents the org unit 340ₓₙ to which the secondary hierarchy pertains. The relationships of the components of the different levels are indicated by lines, forming a tree structure. An org unit may include z subprocesses, where z is equal to or greater than 1. As shown, the secondary hierarchy is a SCS hierarchy. For example, the secondary hierarchy includes subprocesses in the second or intermediate level 410₁. As shown, the unit includes first and second subprocesses 430₁ and 430₂. Providing an org unit with other number of subprocesses may also be useful. A subprocess may include one or more controls 450_{zm} in the bottom level 410₂, where z corresponds to the subprocess of the org unit in the intermediate level and m corresponds to the number of controls in a subprocess. As shown, the first subprocess has two controls 450₁₁ and 450₁₂ while the second subprocess has three controls 450₂₁, 450₂₂ and 450₂₃. Other hierarchies or relationships may also be useful and may depend on the SCS which is modeled. In the case of a RCS hierarchy, the intermediate levels would include risks instead of subprocesses.

As described, a unit includes three levels. It is understood that the different units of the primary hierarchy need not have the same number levels. For example, different units may have different models. Other configurations may also be useful.

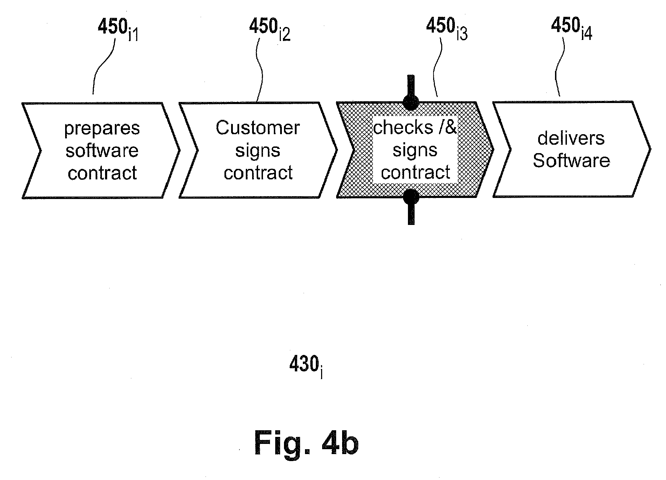

Fig. 4b illustrates an exemplary subprocess subset 430ᵢ. The subset is related to a sales transaction. For example, the subset is related to the sale of a software product. The subset includes controls related to a sales transaction of the software product. As shown, the subset includes first, second, third and fourth controls 450ᵢ₁, 450ᵢ₂, 450ᵢ₃ and 450ᵢ₄. The first control is the preparation of a contract by the vendor, the second control 450ᵢ₂ is execution of the contract by the customer, the third control 450ᵢ₃ is to review the contract to ensure that that contract is signed by the customer and that there are no unfavorable modifications which may negatively impact the transaction and the fourth control 450ᵢ₄ is the delivery of the software, completing the process.

The controls may be sequential in nature. For example, the next step in the process is not performed until the associated control of the previous step is indicated as approved or signed-off. For example, this may avoid the risk that software is delivered to a customer prematurely. Additionally, this ensures that the requirements for revenue recognition are fulfilled. Other configurations of controls may also be useful. The controls may be parallel controls or a combination of parallel and serial controls, for example, depending on the model.

The information related to the hierarchies may be stored in, for example, a database. The information may include organization units and their relationships. An organization unit may include associated subprocesses and controls. Based on this information, the IFV may be employed to display the hierarchies. The information may be stored in various forms. For example, the information may be stored in a single file or multiple files.

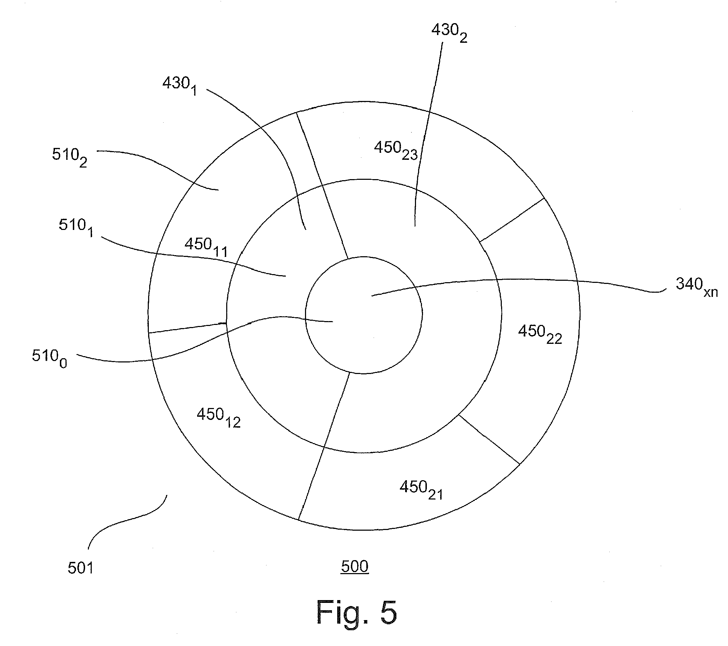

Fig. 5 shows an embodiment of a 2-dimensional (2-D) display or representation of a secondary hierarchy 500 of an org unit 340_{xn.} In one embodiment, the secondary hierarchy is a SCS hierarchy of an org unit. Other types of secondary and primary hierarchies may also be useful. For example, the secondary hierarchy may be a RCS hierarchy. The SCS hierarchy, for example, corresponds to the SCS tree hierarchy 400 of Fig. 4. Common elements may not be described or described in detail. The SCS hierarchy, in one embodiment, is represented by a radial object 501. The radial object, for example, may be a radial geometric object or figure, such as a radial circular object. Other geometric shapes for the radial object may also be useful. The radial object includes y concentric zones extending from the center. The number of concentric zones corresponds to number of levels in the SCS hierarchy. In one embodiment, the radial object includes three concentric zones 510₀₋₂, corresponding to three levels in the SCS hierarchy. Providing other number of concentric zones may also be useful.

In one embodiment, the innermost zone is the highest level of the hierarchy and decreases as it extends outward from the radial object. For example, the intermediate concentric zone is the intermediate level and the outermost concentric zone is the lowest level. In one embodiment, an org unit 340ₓₙ is disposed in the innermost zone. As for the intermediate concentric zone, it includes, for example, the subprocesses of the organizational unit. The intermediate zone is divided into z intermediate segments. A segment is a subprocess of the organizational unit. For example, z intermediate segments are provided for an organizational unit with z subprocesses. As shown, the organizational unit includes first and second subprocesses 430₁₋₂ (e.g., z=2).

Controls of the subprocesses are located in the outermost zone. The outermost concentric zone is separated into major outer segments aligned with the subprocesses. Within a major outer segment are controls of a subprocess with which it is aligned. A major segment is divided into m minor segments. A minor segment is a control of the subprocess. As shown, the first subprocess includes first and second controls 450₁₁ and 450₁₂ (e.g., m = 2) while the second subprocess includes first, second and third controls 450₂₁, 450₂₂ and 450₂₃ (e.g., m = 3).

In one embodiment, the outermost concentric zone is divided into n equal minor segments, where n is equal to the total number of controls for all the subprocesses. As shown, the first and second subprocesses include a total of five controls (e.g., n = 5). As such, the outermost concentric zone is divided into five equal minor segments. The controls of a subprocess are contained in a major segment which is contained within the boundaries of the intermediate concentric zone of the subprocess. Since the first subprocess has two controls and the second subprocess has three controls, the major segment of the first subprocess occupies 2/5 of the area of the outermost concentric zone while the major segment of the second subprocess occupies 3/5 of the area of the outermost concentric zone. Likewise, the intermediate segment of the first subprocess occupies 2/5 of the area of the intermediate concentric zone while the intermediate segment of the second subprocess occupies 3/5 of the area of the intermediate concentric zone.

Alternatively, the segments may have other configurations. For example, the control segments may have different sizes. The size of a control segment may be used to indicate its relative importance versus other controls.

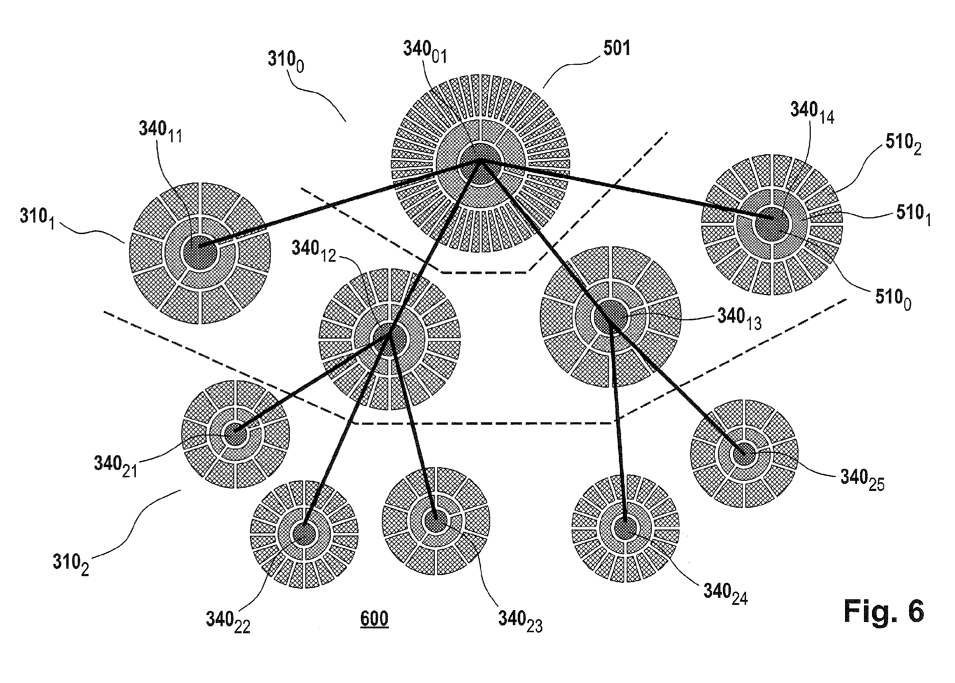

Fig. 6 shows an exemplary embodiment of a 2-D multi-hierarchy view or display 600. The view includes primary and secondary hierarchies. In one embodiment, the primary hierarchy is an organization hierarchy and the secondary hierarchy is a SCS hierarchy. The organization hierarchy may be similar org unit 340ₓₙ to that described in Fig. 3. The secondary hierarchy, for example, is a SCS hierarchy similar to that described in Fig. 4. Other types of secondary hierarchies may also be useful. Common elements may not be described or described in detail. Other types of primary and secondary hierarchies may also be displayed.

In one embodiment, the primary hierarchy is represented by a tree structure. For example, the organization hierarchy is represented by a tree structure or treemap. The tree structure includes h organizational levels. As shown, the tree structure has three levels 310₀₋₂. Providing a hierarchy with other number of levels may also be useful. Org units 340ₓₙ are located at the different organizational levels.

At the highest level 310₀, org unit 340₀₁ corresponds to, for example, the corporation. Illustratively, the intermediate level has four intermediate level org units 340₁₁, 340₁₂, 340₁₃ and 340₁₄ and the bottom level has five bottom level org units 340₂₁, 340₂₂, 340₂₃, 140₂₄ and 340₂₅. The intermediate level org units may be major units of the corporation and the bottom level org units may be minor units of the major units. The second major org unit 340₁₂ includes three minor org units 340₂₁, 340₂₂ and 340₂₃ while the third major org unit 340₁₃ includes two minor org units340₂₄ and 340₂₅. Other configurations of the organization hierarchy may also be useful, depending on the corporation being modeled.

The units of the primary hierarchy include secondary hierarchies. For example, an org unit has a secondary hierarchy, such as a SCS hierarchy. In one embodiment, the secondary hierarchy of an org unit is represented by a radial geometric figure or object 501, similar to that described in Fig. 5. Common elements may not be described or described in detail.

The radial geometric figure of an org unit, as shown, is a circular object. Other geometric shapes for the radial object may also be useful. The radial object includes y concentric zones extending from the center. The number of concentric zones corresponds to number of levels in the SCS hierarchy. In one embodiment, the radial object includes three concentric zones 510₀₋₂, corresponding to three levels in the SCS hierarchy. Providing other number of concentric zones may also be useful. The innermost zone is the highest level, representing an org unit. The intermediate concentric zone is the intermediate level and the outermost concentric zone is the lowest level. In the intermediate concentric zone are subprocesses of the org unit while the outermost concentric zone includes controls of the subprocesses.

As shown, the radial figures of the org units vary in size, depending on the organizational level of the org unit. For example, the larger the size of a radial figure, the higher the organizational level of the org unit. Conversely, the smaller the size of the radial figure, the lower the organizational level org unit. Org units at the same level have the same size radial figure. For example, the corporation at the top organizational level is represented by the largest radial figure, the major org units at the intermediate level have radial figures which are smaller than that of the corporation while the minor org units at the bottom level have the smallest radial figures. Other configurations of radial figures may also be useful. Lines radiate out from the org units to indicate their relationships.

In other embodiments, the secondary hierarchy may be a RCS hierarchy. The RCS hierarchy of the org units may be represented in radial figures, similar to that of the SCS hierarchy.

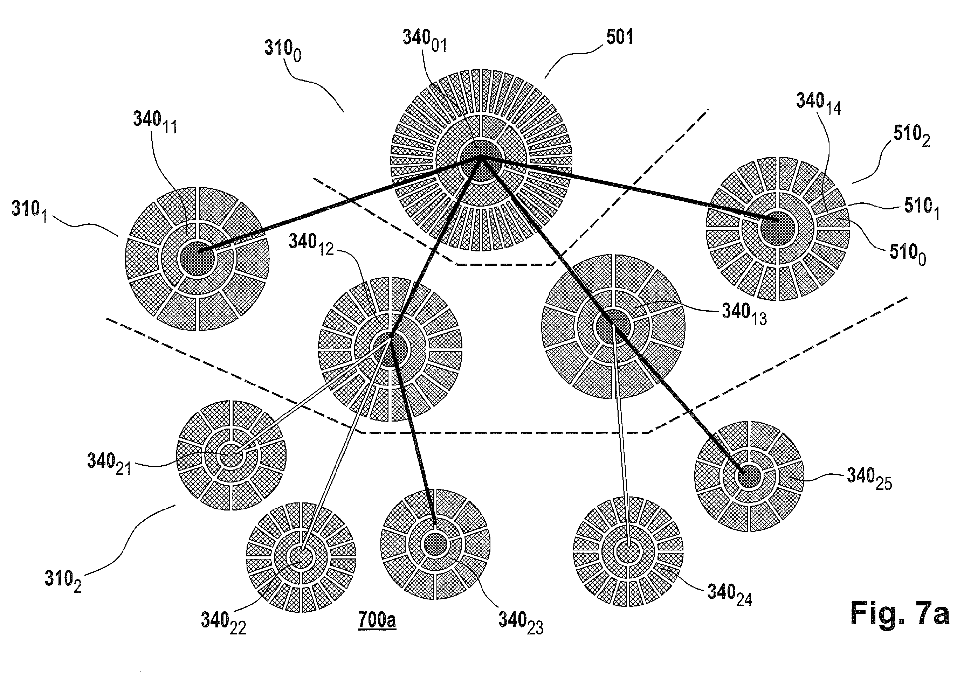

Figs. 7a-b illustrate a filtering function for a multi-hierarchy display. Referring to Fig. 7a, a multi-hierarchy display 700a is shown. The multi-hierarchy display, for example, is similar to that shown in Fig. 6. Common elements may not be described or described in detail. A user may perform a filter for elements in the hierarchy. For example, a user may filter for elements based on criteria. Org units having subprocesses and corresponding controls which satisfy the filtering criteria may be presented in normal colors, while subprocesses and controls which do not satisfy the filtering criteria are lightened or displayed in a gray tone. Such representation may be referred to as a percentage color distribution scheme. For example, the user may filter for controls which have passed testing. Controls which have passed testing, for example will be highlighted. Other types of filtering or criteria may also be useful.

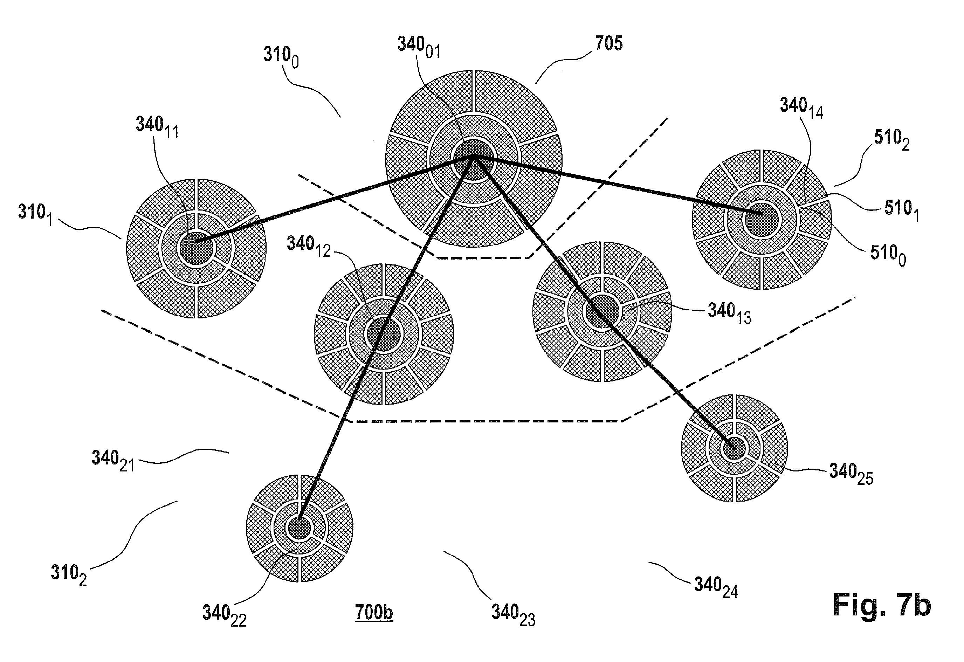

Referring to Fig. 7b, matches from the search may be displayed in a subgroup 705 of the hierarchy. For example, non-matching components are trimmed out and the remaining matching components are displayed as a subgroup hierarchy.

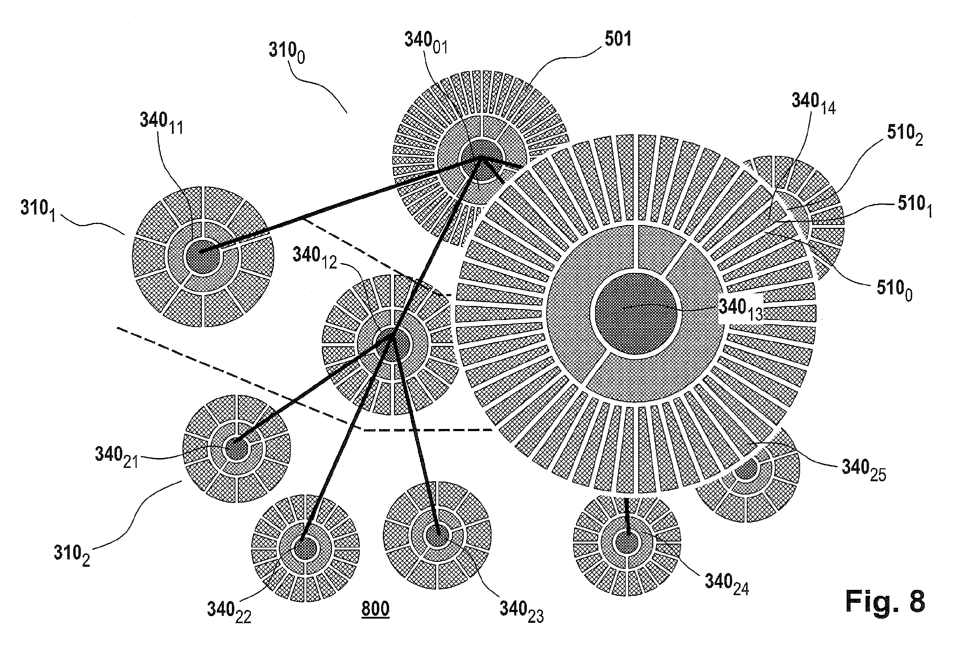

Fig. 8 illustrates a drill down function for a multi-hierarchy display 800. The multi-hierarchy display, for example, is similar to that shown in Fig. 6. Common elements may not be described or described in detail. A user may drill down on a selected org unit. Drilling down provides, for example, detail information of the subprocesses and controls of the selected org unit. For example, the selected org unit will be displayed in the foreground while the non-selected org units are lighted and remain in the background. The user may have an option to display the subprocesses and controls in text form or in both graphical and text form.

The IFV may include a UI which displays the hierarchies as well as provide command buttons and menu bar to facilitate the user in performing various functions described. It is understood that the functions described are not limiting and other functions may be provided by the UI.

As described, the evaluator may be embodied as an application. For example, the evaluator may be embodied as a software application. The application may be integrated into an existing software application, such as a GRC application, as an add-on or plug-in to an existing application, or as a separate stand-alone application. The existing software application may be a suite of software applications. The source code of the display system may be compiled to create an executable code. The codes, for example, may be stored in a storage medium, such as one or more storage disks. Other types of storage media may also be useful.

Although the one or more above-described implementations have been described in language specific to structural features and/or methodological steps, it is to be understood that other implementations may be practiced without the specific features or steps described. Rather, the specific features and steps are disclosed as preferred forms of one or more implementations. With respect to the use of substantially any plural and/or singular terms herein, those having ordinary skill in the art can translate from the plural to the singular and/or from the singular to the plural as is appropriate to the context and/or application.

## Claims

1. A wireless telecommunication method between a remote server and a battery-powered mobile hand-held terminal via a mobile cellular digital telecommunication network, the mobile terminal comprising:
• a transceiver adapted to transmit and receive data via the mobile cellular digital telecommunication network,
• at least one processor for providing an interface engine, the interface engine comprising a browser program,
• a touch-sensitive display being coupled to the interface engine,
• a battery,
• a memory for storing machine executable instructions for execution by the processor
the method comprising:
• receiving an electronic document from the remote server using the transceiver,
• rendering the received electronic document using the interface engine,
• displaying the rendered electronic document using the touch-sensitive display;
wherein the rendering comprises:
providing a primary hierarchy having primary components arranged in different primary hierarchical levels; and
providing a secondary hierarchy for the primary components of the primary hierarchy, wherein
the primary components are configured as geometric objects with concentric zones corresponding to different secondary hierarchical levels with secondary components,
an innermost concentric zone of the geometric objects is the highest secondary level of the secondary hierarchy and outer concentric zones correspond to lower secondary levels of the secondary hierarchy, with an outermost concentric zone corresponding to the lowest secondary level of the secondary hierarchy, and
the concentric zones at lower secondary levels are divided into segments corresponding to a number of secondary components in the lower secondary levels, wherein each of the primary and secondary components is representative of a search criterion,
wherein the primary and secondary components are selectable using the touch-sensitive display of the mobile terminal,
wherein upon selection of at least one of the primary and/or secondary components a query comprising the search criterion the selected component is representative of is generated by the at least one processor and sent to the remote server using the transceiver.

2. The method of claim 1, further comprising resizing the rendered electronic document to the size of the touch-sensitive display,
wherein the battery-powered mobile hand-held terminal further comprises an entry pen adapted for the selection of components from the displayed rendered electronic document.

3. The method of claim 2, the browser program of the interface engine comprising scrolling display functions, wherein the battery-powered mobile hand-held terminal is operable for switching into a power saving mode by disabling a functionality of displaying electronic documents using scrolling display functions on the touch-sensitive display of the battery-powered mobile hand-held terminal upon resizing the rendered electronic document.

4. The method of any of the preceding claimswherein the primary components are arranged in a tree structure corresponding to the different primary hierarchical levels.

5. The method of claim 4 wherein:
a number of primary hierarchical levels in the tree structure depend on a primary hierarchy model; and
a number of secondary hierarchical levels depend on a secondary hierarchy model.

6. The method of claim 5 wherein the highest primary level of the tree structure corresponds to the highest primary component and lower primary levels corresponds to lower level primary components, with the lowest primary level of the tree structure corresponding to the lowest primary level of the primary hierarchy.

7. The method of claim 6 wherein:
the geometric object of the primary component at the highest primary level is the largest;
geometric objects of the primary components at lower primary levels are smaller than the geometric object at the highest level, with the primary components at the lowest primary level being the smallest; and
geometric objects of the primary components at the same primary level are the same size.

8. The method of claim 6 wherein an innermost concentric zone of the geometric objects is the highest secondary level of the secondary hierarchy and outer concentric zones correspond to lower secondary levels of the secondary hierarchy, with the outermost concentric zone corresponding to the lowest secondary level of the secondary hierarchy.

9. The method of claim 8 wherein concentric zones at lower secondary levels are divided into segments corresponding to a number of secondary components in the lower secondary levels.

10. The method of claim 9 wherein lower secondary components in a lower secondary level which correspond to a secondary component at a higher lower secondary level are disposed within boundary of the segment of the corresponding secondary component in the higher lower secondary level.

11. The method of claim 1 wherein the primary hierarchy comprises an organization hierarchy with primary components comprising organization units.

12. The method of claim 11 wherein the secondary hierarchy comprises a subprocess-control structure (SCS) hierarchy of the organization units.

13. The method of claim 12 wherein the SCS hierarchy comprises first, second and third concentric zones corresponding to first, second and third secondary hierarchical levels,
an innermost concentric zone is a highest secondary hierarchical level;
an intermediate concentric zone is an intermediate secondary hierarchical level; and an outermost concentric zone is a lowest secondary hierarchical level.

14. The method of claim 13 wherein:
the innermost zone corresponds to an organization units of the primary hierarchy;
the intermediate concentric zone corresponds to subprocesses of the organization unit; and
the outermost concentric zone corresponds to controls of the subprocesses.

15. The method of claim 14 wherein:
the intermediate zone is divided into intermediate segments corresponding to subprocesses of the organization unit; and
the outermost concentric zone is divided into sets of outermost segments in corresponding to sets of controls of the subprocesses, the sets of controls are disposed within boundaries of respective subprocesses.

16. The method of claim 11 wherein the secondary hierarchy comprises a risk-control structure (RCS) hierarchy of the organization units.

17. The method of claim 1 further comprising filtering the multiple hierarchies to find matching primary components based on filtering criteria.

18. A battery-powered mobile hand-held terminal comprising:
• a transceiver adapted to transmit and receive data via a mobile cellular digital telecommunication network,
• at least one processor for providing an interface engine, the interface engine comprising a browser program,
• a touch-sensitive display being coupled to the interface engine,
• a battery,
• a memory for storing machine executable instructions for execution by the processor,
the machine executable instructions causing the battery-powered mobile hand-held terminal to:
• receive an electronic document from a remote server using the transceiver,
• render the received electronic document using the interface engine,
• display the rendered electronic document using the touch-sensitive display;
wherein the rendering comprises:
providing a primary hierarchy having primary components arranged in different primary hierarchical levels; and
providing a secondary hierarchy for the primary components of the primary hierarchy, wherein
the primary components are configured as geometric objects with concentric zones corresponding to different secondary hierarchical levels with secondary components,
an innermost concentric zone of the geometric objects is the highest secondary level of the secondary hierarchy and outer concentric zones correspond to lower secondary levels of the secondary hierarchy, with an outermost concentric zone corresponding to the lowest secondary level of the secondary hierarchy, and
the concentric zones at lower secondary levels are divided into segments corresponding to a number of secondary components in the lower secondary levels, wherein each of the primary and secondary components is representative of a search criterion,
wherein the primary and secondary components are selectable using the touch-sensitive display of the mobile terminal,
wherein upon selection of at least one of the primary and/or secondary components a query comprising the search criterion the selected component is representative of is generated by the at least one processor and sent to the remote server using the transceiver.

19. A system comprising at least one battery-powered mobile hand-held terminal according to claim 17 and at least one remote server, the battery-powered mobile hand-held terminal and the remote server being operable to establish a connection via a mobile cellular digital communication network.
